# EUROPEAN PATENT APPLICATION

(11) **EP 2 096 835 A1**
(43) Date of publication of application: **02.09.2009**
(21) Application number: 08290202.4
(22) Date of filing: 28.02.2008
(51) Int. Cl.: H04L 29/08, H04L 29/06

(54) **System and method for selecting and viewing content from the internet using an existing IPTV infrastructure**

(71) Applicant: Alcatel Lucent, 75008 Paris (FR)
(72) Inventor: Verhoeyen, Marc, 9700 Oudenaarde (BE)
(74) Representative: D'Halleweyn, Nele Veerle Trees Gertrudis

(57) **Abstract**

System for selecting and viewing video content from the internet by a user having a screen and input means operable by the user, comprising an IPTV infrastructure including at least one caching device, an IPTV network and an IPTV connections means at the user side, such as a set-top box, said IPTV connection means being connectable to the screen and adapted for browsing the internet via the input means, said IPTV infrastructure being adapted so that video content from the internet is storeable in the caching device and streamable from the caching device to the user.

## Description

The present invention generally relates to a system for selecting and viewing video content from the internet by a user having a screen and input means operable by the user, comprising an IPTV infrastructure. The invention further relates to a method for selecting and viewing content from the internet by a user using an IPTV infrastructure.

Existing PC to TV interconnectivity via consumer electronics allows for solutions based on internet access delivery. This implies so-called "best effort" delivery meaning that there is no guarantee in delivering all packets within a given time frame. However, when watching video content it is often desirable to have a certain quality of service (QoS). Existing PC to TV interconnectivity solutions with best effort delivery comprise TiVo, Apple (Apple TV), Microsoft (MediaCenter), Pinnacle Systems, etc. For convenience we give below an overview of the existing "boxes" together with details of their architecture.

Some existing "boxes" allow to display media (photos, audio, movies) which are stored in the home (on disk or in flash memory) on a TV set. Examples of those so-called TV compatible "Digital Media Players" (DMP) are Pinaccle, D-link, Netgear, and generally any hard-disks that connect directly to a TV.

Other "boxes" consist of a PC with dedicated software. Those boxes fall in the class of the Media Centres allowing to display media on the TV and to get content from the internet on a storage (typically in the PC itself). Such Media Centres allow to display content on the TV via direct connections or via an extender box close to a TV set. Getting the content from the internet is done via a normal PC browser. An example is the Microsoft Media Centre.

Still other boxes combine a Media Centre and a DMP in a dedicated box. Examples are Apple TV (Apple) and XBOX 360 (Microsoft gaming device). Initially the Apple TV required the PC (read MAC), except for some YouTube selected movies, but in further developed versions Apple TV would be able to get content from the internet without the need for a PC.

In conclusion, the boxes of the state of the art allow to display media, to store media in the home, to get content from the internet on a user TV set, but all have the disadvantage that separate dedicated boxes not belonging to the IPTV infrastructure are needed for viewing video content from the internet.

The object of the invention is to provide a method and system allowing content of an IPTV service provider and content of the internet to be viewed by a user in a more efficient way, and in particular allowing the user to watch video content from the internet with a sufficient quality.

To reach this object the system of the invention is distinguished by the features of claim 1.

Using such a system the IPTV service provider can offer the user an additional service using the existing IPTV network. Indeed, the system allows for the user to select an item on an internet page associated with video content with a dedicated selection means. Using this dedicated selection means the user indicates that he wishes to view the associated video content with the same quality as watching a "normal" IPTV service, such as VoD. The at least one caching device in the IPTV infrastructure typically allows for first caching the video content and next streaming the cached content to the user so that a good QoS is offered.

The at least one caching device can be located anywhere in the IPTV infrastructure, be it in the IPTV network and/or in the set-top box. According to a possible embodiment of the invention a number of caching devices can be distributed over the IPTV network, but it is also possible to provide one caching device centrally in network, or to provide the caching device in the set-top box.

The invention also relates to input means for a system according to the invention. The input means are provided with a dedicated button or other selection means for selecting internet video content, wherein the dedicated selection means is arranged for causing a message to be sent by the IPTV connection means to the IPTV network for obtaining the video content with a good quality.

The method of the invention is distinguished by claim 6.

According to a preferred embodiment when an item of an internet page associated with video content is selected on the screen by a user using dedicated selection means, a signal is sent from the IPTV connection means to a proxy of the IPTV network, which proxy triggers a request to the internet for obtaining the associated content. Such a request may also be performed conditionally, depending for example on the presence of the content in the IPTV network.

According to a further developed embodiment the IPTV infrastructure verifies whether the associated content is cached in the IPTV infrastructure, and if yes, retrieves the cached content and streams it to the IPTV user.

Further the IPVT infrastructure may verify whether the data centre where the associated video content is stored is within a certain distance from the IPTV infrastructure, and that if the outcome is yes, the associated data is streamed directly from the data centre to the user. Indeed, in such a case a best effort delivery will be of sufficiently good quality.

Advantageous embodiments are disclosed in the dependent claims. It is noted that the dependent claims referring to claim 1 or to claim 6 may be combined with any of the previous claims.

The accompanying drawings are used to illustrate presently preferred non-limiting exemplary embodiments of the present invention. The above and other advantages features and objects of the invention will become more apparent and the invention will be better understood from the following detailed description when read in conjunction with the accompanying drawings in which:
- Figure 1 is a simplified schematic drawing of an exemplary network environment in which an embodiment of the method and system of the present invention is practiced;
- Figure 2 is a simplified schematic diagram of a typical message and data exchange between the user and the IPTV network, and between the user and the internet via the IPTV network, wherein the message and data exchanges are performed according to an embodiment of the method of the invention;
- figure 3(A) is a flow chart of the steps at the home side and figure 3(B) is a flow chart of the steps in the IPTV network according to an embodiment of the method of the invention.

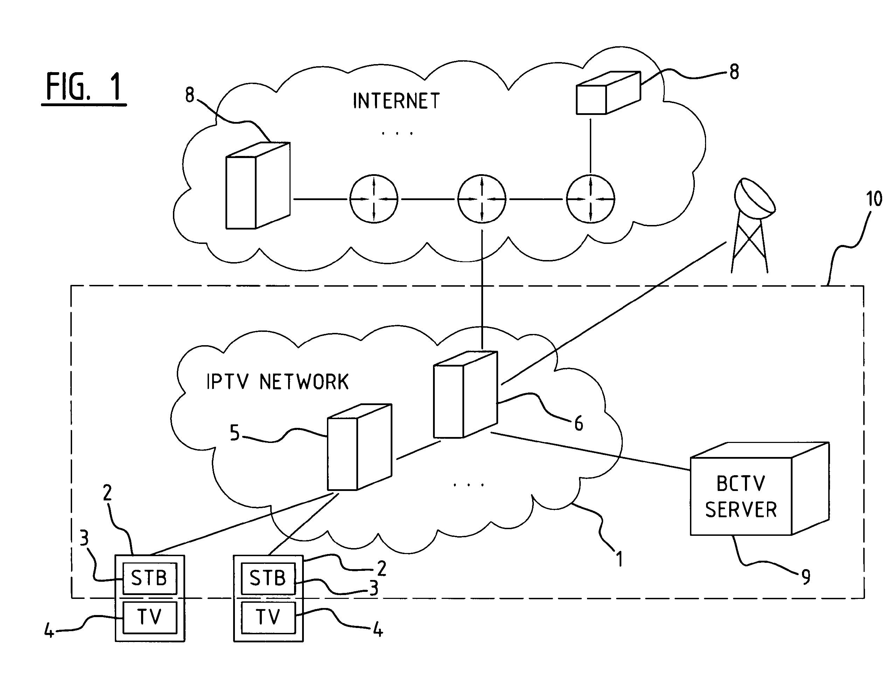

Figure 1 demonstrates an embodiment of a network environment wherein the method and the system of the present invention is employed. In the existing IPTV infrastructures 10 a broadcast TV signal is typically sent from a BCTV server 9 over the IPTV network 1 to serve the clients 2 (end-users). The IPTV provider infrastructure 10 typically comprises at the user-side, i.e. at the home, a Set Top Box (STB) 3 for connection with a TV 4.

The IPTV network 1 is a managed IP network capable of delivering video services such as linear programming TV (LPTV) via IP broadcasting. Typically, different levels of traffic aggregation (close and further away from the subscriber) may exist. In the present example an IP portal server 5 close to the user side is exploited. Such an IP portal server 5 may be part of a DSLAM, but can in principle be part of any node in the IPTV network or in a standalone IPTV network node. According to the embodiment illustrated in figure 1 a caching device 6 is positioned more centrally in the IPTV network. But again, the caching device may be provided anywhere in the IPTV infrastructure (including in the STH). According to a preferred solution there will be provided a number of caching devices in the IPTV network. Of course the skilled person will understand that other configurations and other distributions of the different functions are possible.

At the user side, the home network typically includes the STB 3, the TV 4, and a user capable to select content on his TV via a remote control, although other input devices are also within the scope of the invention.

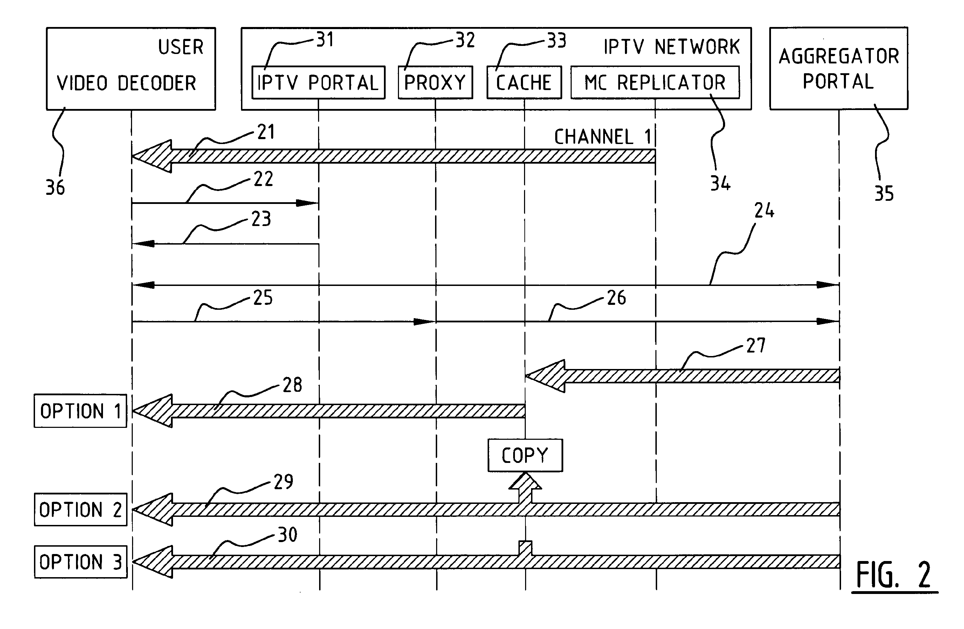

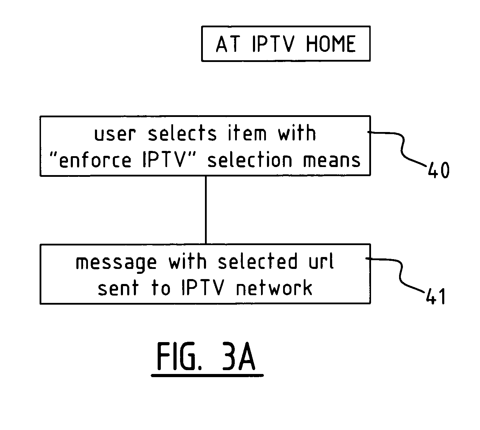

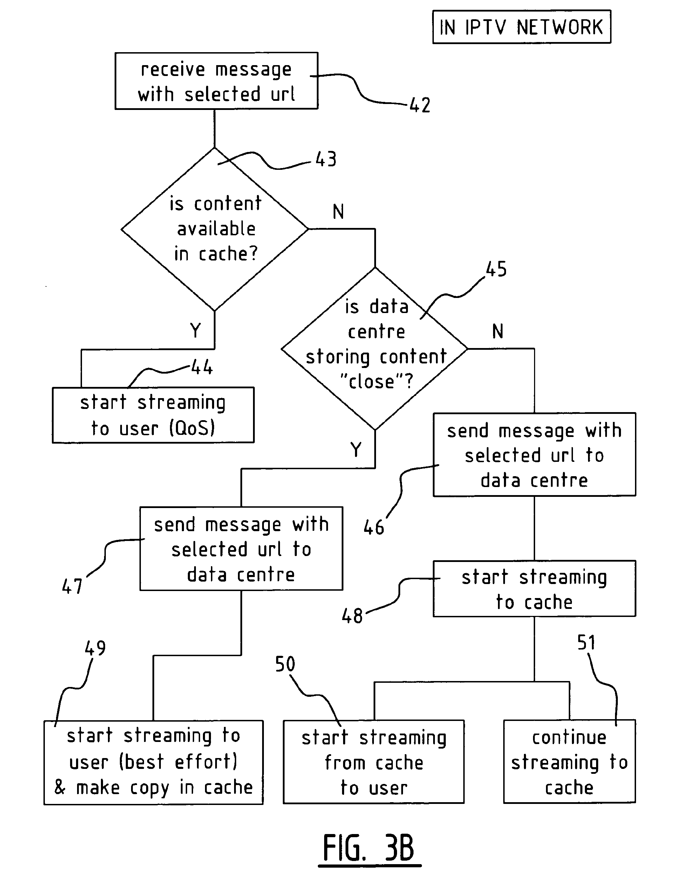

The internet 7 makes video content available through data centres 8 exploited by content providers, video aggregators and the like. Examples of web pages offering video content are Joost, YouTube, iTunes, etc. Content Distributor Network (CDN) providers are employed by the organisation behind e.g. YouTube to built sufficient data centres 8 where the video data is stored. Data centres 8 can be central or more close to the IPTV network and the number of data centres used by a certain content provider will typically be dependent on the success of the content provider. As will be explained with reference to figures 2 and 3, the distance between the IPTV network and the data centre storing the requested content, may be used for deciding whether to cache the content first in a caching device and next stream it, or whether to stream the content directly to the user. This is because "best effort" streaming will usually be acceptable when the data centre is nearby, while it will typically be unacceptable if the data centre is far away.

Now the exchange of messages and data between the user and the IPTV network according to an embodiment of the method of the invention will be set out in detail with reference to figures 2 and 3.

It is assumed that the end user is watching Linear Programming TV (LPTV) on channel 1. During this period IPTV "channel 1" data is streamed from the IPTV network to the user, which is indicated with arrow 21.

At some point in time the user may decide to watch video content from the internet, such as YouTube video clips, on his TV set. In order to do so, he will open an electronic programming guide (EPG) or interactive program guide (IPG) which he selects with a corresponding EPG/IPG button on his remote control. An EPG or IPG is known and typically allows the user to navigate, select and discover content by time, title, channel, etc. using a remote control. The technology is based upon broadcasting data to an application usually residing in middleware in the set-top box connected to the TV and enabling the application to be displayed. Typical elements of an EPG comprise a graphical user interface which enables the display of program titles, descriptive information, the channel name, etc. The information is usually displayed on a grid with the option to select more information on each program.

Before displaying the requested web page, there will typically be some intermediate screens presented to the user, and after making the correct choices, the user will be looking to a web page which is produced by the IPTV service provider.

According to an embodiment of the invention, the IPTV service provider offers the user via its webpage, amongst other options, the capability to browse the internet, wherein the STB or similar IPTV infrastructure element at home is arranged for running a browser. This implies that the STB will have to be provided with sufficient memory and programming power.

The user now browses the internet in the same way as he would do on a PC. However, the browser usually is IPTV service provider specific, i.e. the browser will be tuned in capabilities, allowing more or less experiences compared to browsing on a PC. A tuned browser will typically not include all possible plug-ins for all types of picture, audio, video, but only a core set of plug-ins. Further a tuned browser will usually only be adapted for using the standard communication protocols such as http, will typically not allow to have many web-pages open at the same time, and will not keep track of a long history nor allow a lot of customisation, etc. The basic idea is that the tuned browser should allow basic surfing and the selection of video content.

When selecting the browser in the EPG, a http join internet TV message 22 is sent from the user 36 to a IPTV portal server 31. The IPTV portal server replies with a suitable reply message 23 to acknowledge the joining of the internet. Now the user can receive information from the internet as indicated with arrow 24.

When browsing through the web pages of interest to the user, he may start to step through different url's associated with that web page. This "stepping" could for example be realised by pushing a cursor button on his remote control, or this could be done in a much more sophisticated way. The remote control could for example be provided with a pointing device with functionalities equivalent to those of a mouse or touch pad mouse.

For the current embodiment it is important that the user can selects a given url, i.e. an on-screen item that embodies a url. Such a selection can for example be visualised by highlighting that item. When the user wants to watch video content assumed to be associated with the selected url, he may press a dedicated selection button on his remote control or a dedicated virtual button on the screen. Note that any other selections means is also within the scope of the invention. Pressing this dedicated selection button or more generally selecting the "enforce IPTV" function, will allow the user to watch the video content with a guaranteed quality of service (QoS). The alternative is that the user pushes a normal selection button which allows him to surf the associated web pages through a best effort connection.

According to the embodiment of the invention of figure 2, selecting the IPTV enforce function (e.g. by pressing an IPTV enforce button) results in a signal 25 being sent from the user 36 to a proxy 32 in the IPTV network. This signal 25 will for example be an RTSP message comprising the selected url. Other possible signalling methods that may be used comprise SIP (Session Initiation Protocol) based methods or http based methods or similar.

In reply to this message 25 an http request 26 comprising the selected url is sent to the aggregator portal server 35, i.e. the server where the selected video content is residing. In other words, the message 25 is terminated and interpreted by the IPTV service, wherein the IPTV service provider issues the request of the end user 36 as if the end user would have clicked on the url for issuing directly a http request.

The aggregator portal server 35 connected to the internet will respond on the http request by streaming or downloading the video content. According to the embodiment of figure 2, three options are possible:
(1) The video content is streamed to a caching device 33 as indicated with arrow 27. The resulting data is interpreted by the IPTV service provider and if proper video content is delivered, it will be cached in a caching device 33. The cached video content can then be streamed to the user as indicated with arrow 28.
(2) The video content is streamed immediately to the end user, wherein the cache 33 is filled with copies during streaming. This is indicted with arrow 29
(3) The video content was already present in the cache and is streamed from the cache 33 to the end-user 36, as indicated with arrow 30.

If the video content is not present in the cache, the caching device has the choice between option 1 and 2 above. Deciding between option (1) and (2) can for example be based on the distance between the IPTV network and the aggregator portal. If the IPTV service provider is able to estimate a good quality delivery for the full file, then option 2 may be preferable. Otherwise video content requested for a first time will first be cached and then streamed to the end user, according to option 1. In this case it is preferable to communicate any perceptible delay to the end user.

Of course, if the content selected by then IPTV enforce button is already present in the cache, no http request 26 will have to be issued to the internet. In this case, the end user will be serviced immediately from the cache (option 3 above), similar to a video on demand service that is typically also delivered by IPTV service providers.

Additional content management, such as keeping track of meta data, may or may not be done by the IPTV service provider. According to a possible embodiment information about the requested video content, such as information about the film or the actors, may be given to the user. The IPTV service provider could for example have his own database with such information or could get this information from an internet movie database such as http:\\www.imdb.com.

Figure 3(A) and (B) illustrate a possible method for deciding between option (1) to (3) above. It is assumed that at the home side of the IPTV infrastructure the user selects an item on the screen associated with video content using the "enforce IPTV" selection means (step 40), whereupon a message with the selected URL is sent to the IPTV node (step 41). When the message is received in the IPTV network (step 42) it is verified whether the content associated with the selected URL is available in the cache (step 43). If the outcome is positive the content is streamed from the cache to the end-user serving the user with QoS video content (step 44). In the negative, it is verified whether the data centre storing the data associated with the selected URL is "close" (step 45). If yes, steps 47 and 49 are performed, and the streaming is done directly from the data centre to the end-user, wherein a copy may be made in the cache for future requests. If not, steps 46, 48, 50 and 51 are performed. In step 48 the streaming to the caching device is started. Preferably the streaming from the cache to the user (step 50) will start as soon as there is a certain amount of video data (e.g. 10 minutes of film) available in the cache. In parallel the streaming from the data centre to the caching device will continue (step 51) until the complete video content is stored in the cache.

In other words, by leveraging the basic IPTV service, the IPTV user is offered the possibility to select a channel which gives access to internet content on his TV set via his IPTV graphic user interface (GUI). Further, it is possible to offer a similar quality of service as other IPTV delivered video content. Another advantage is that the IPTV home infrastructure, for example the STB, is reused, and that the interim storage in the caching device allows the IPTV provider to optimize his bandwidth requirements towards the internet, since stored objects can be retrieved from the cache instead of having to request it again over the internet for each consumer request. According to a preferred embodiment, the consumer is informed on the content that is being or will be delivered. Important information to be passed to the user is the delay between selection and the arriving video packets, as a user will typically get irritated if he does not know how long he will have to wait. While waiting, other IPTV content, such as advertising can be pushed to the user.

The skilled person will understand that the solution offered by certain embodiments of the invention is open to:
- any method for selecting content on a TV screen using a remote control or equivalent means.
- any user interface that enables the user to browse the internet and/or pre-stored content; an example being a browser and a portal.
- other viewing means such as a PC or portable media player or PDA, etc. provided that the IPTV portal is adapted for easy viewing and interaction with that other screen.
- any type of information subsequent to the selection of the IPTV enforcement button; a deep packet inspection could for example reveal the type of video content and the type of coding which was applied, which information may be passed to the user according to a possible embodiment of the invention. Also in case the user has selected content which after verification is not recognised as video content, the user will preferably be informed thereof.
- any storage management strategy. This means that any strategy can be used to determine which content is kept on the video storage, for example for later pushing and/or for a subsequent consumer request for the same content. This could for example be a "least recently used" or "least frequently used" strategy.
- any storage distribution strategy. This means any strategy to determine where which content is stored. Preferably, a high number of simultaneous requests should be able to properly scale in the IPTV network.
- any method in preparing content in the IPTV service provider cache. This is preferably done in such a way that delays of content delivery are avoided for a first request. According to a preferred embodiment the content in the cache is prepared in an intelligent way where only an initial chunk of video information is prepared. This is also called progressive download. An example would be that after downloading of the first 15 minutes of the film, the streaming to the user is started, as explained with reference to figure 3.

Finally, it is noted that the "enforce IPTV" service could be charged separately by the IPTV subscriber or could be bundled with other IPTV provider video services.

While the principles of the invention have been set out above in connection with specific embodiments, it is to be clearly understood that this description is merely made by way of example and not as a limitation of the scope of protection which is determined by the appended claims.

## Claims

1. System for selecting and viewing video content from the internet by a user having a screen and input means operable by the user, comprising an IPTV infrastructure including at least one caching device, an IPTV network and an IPTV connections means at the user side, such as a set-top box, said IPTV connection means being connectable to the screen and adapted for browsing the internet via the input means, said IPTV infrastructure being adapted so that video content from the internet is storeable in the caching device and streamable from the caching device to the user.

2. System according to claim 1, **characterized in that** the at least one caching device is located in the IPTV network.

3. System according to claim 1, **characterized in that** the at least one caching device is located in the IPTV connection means, preferably a customer located device, such as a set-top-box.

4. System according to claim 1, **characterized in that** the IPTV infrastructure is arranged for offering the user an EPG, said EPG comprising at least one channel for internet browsing.

5. Input means for a system according to claim 1, **characterized in that** the input means are provided with a dedicated selection means for selecting internet video content, wherein the dedicated selection means is arranged for causing a message to be sent by the IPTV connection means to the IPTV network for obtaining the video content with a good quality.

6. Method for selecting and viewing content from the internet by a user, wherein an IPTV infrastructure is used, the user being connected to the IPTV infrastructure, **characterized in that** the method comprising the following steps:
- upon an on-screen selection by the user of an item of an internet page associated with video content, the IPTV infrastructure retrieves the associated video content from the internet and caches it in the IPTV infrastructure, and
- the cached video content is streamed to the IPTV user.

7. Method according to claim 6, wherein the IPTV infrastructure comprises an IPTV network with a plurality of proxies, and an IPTV connection means, such as a STB, **characterized in that** upon the on-screen selection of an item of an internet page associated with video content, a signal is sent from the IPTV connection means to a proxy of the IPTV network, which proxy triggers a request to the internet for obtaining the associated content.

8. Method according to claim 6, **characterized in that** upon the on-screen selection, the IPTV infrastructure verifies whether the associated content is cached in the IPTV infrastructure, and if yes, retrieves the cached content and streams it to the IPTV user.

9. Method according to claim 6, wherein the associated content is stored in a data centre in the internet, **characterized in that** upon the on-screen selection, the IPTV infrastructure verifies whether the data centre is within a certain distance from the IPTV infrastructure, and that if the outcome is yes, the associated data is streamed directly from the data centre to the user.

10. Method according to claim 6, wherein normal IPTV services are streamed within the IPTV infrastructure using transport pipes, **characterized in that** the streaming of the associated video content is performed using the same transport pipes or similar pipes, preferably with the same quality of service (QoS) characteristics.
